# EUROPÄISCHE PATENTSCHRIFT

(11) **EP 2 143 246 B1**
(45) Veröffentlichungstag und Bekanntmachung des Hinweises auf die Patenterteilung: **30.05.2018**
(21) Anmeldenummer: 08735647.3
(22) Anmeldetag: 01.04.2008
(51) Int. Cl.: H04L 29/06, H04W 48/08, H04W 80/04, H04W 88/06, H04W 48/18

(54) **SERVER UND VERFAHREN ZUM BETREIBEN DES SERVERS**
SERVER AND METHOD FOR OPERATING SAID SERVER
SERVEUR ET PROCÉDÉ D'EXPLOITATION DE CE SERVEUR

(30) Priorität: 03.04.2007 DE 102007016118
(43) Veröffentlichungstag der Anmeldung: 13.01.2010
(73) Patentinhaber: Siemens Aktiengesellschaft, 80333 München (DE)
(72) Erfinder: TSCHOFENIG, Hannes, 02760 Espoo (FI); SHANMUGAM, Murugaraj, 50969 Köln (DE)
(86) Internationale Anmeldenummer: PCT/EP2008/053874
(87) Internationale Veröffentlichungsnummer: WO 2008/119799

(56) Entgegenhaltungen:
- EP-A1- 1 460 799
- WO-A-2006/109962
- WO-A-2006/125085
- WO-A-2006/132487
- US-A1- 2005 249 161

## Beschreibung

Die vorliegende Erfindung betrifft einen Server, insbesondere für ein Netzwerk, und ferner ein Verfahren zum Betreiben eines Servers. Darüber hinaus betrifft die vorliegende Erfindung ein Verfahren zum Betreiben eines Endgeräts.

Die der Erfindung zu Grunde liegende Problematik wird nachfolgend beispielhaft anhand eines Übertragungsprotokolls nach dem IEEE 802.21 Standard erläutert. Die vorliegende Erfindung ist jedoch nicht darauf beschränkt.

In heterogenen Netzwerken sind unterschiedliche physikalische Schichten (PHY) und Datenverbindungsschichten (MAC) vorgesehen. Eine Datenübertragung über leitungsgebundene und Funkübertragungstrecken in verschiedenen Frequenzbändern werden miteinander gekoppelt oder alternativ zueinander verwendet. Ein Endgerät, zum Beispiel ein Laptop, kann über unterschiedliche Kanäle mit dem Internet verbunden werden. Im Büro kann dies durch ein Kabel, im Park mittels eines Mobilfunkanbieters und z.B. an Flughäfen über wireless LAN erfolgen.

Die einzelnen unterschiedlichen Übertragungskanäle weisen typischerweise verschiedene Übertragungsparameter wie Verfügbarkeit, Übertragungs-Kapazitäten und garantierte Dienstqualität (QoS) auf und es werden für die Übertragung unterschiedliche Roamingsgebühren fällig. Ein Endgerät soll zwischen den verschiedenen bereitgestellten Übertragungskanälen zweckmäßigerweise den auswählen, dessen Übertragungsparameter am besten gestellten Anforderungen gerecht werden. Einen Wechsel zwischen den einzelnen unterschiedlichen physikalischen Übertragungskanälen wird durch den IEEE 802. 21 Standard ermöglicht. Der IEEE 802.21 Standard ermöglicht auch während einer Übertragung einen Wechsel zwischen unterschiedlichen physikalischen Übertragungskanälen.

Die Übertragungsparameter können einem permanenten Wechsel unterliegen. Dies ist einerseits dadurch bedingt, dass die mobilen Geräte beim Transportieren von dem Einzugsbereich eines Dienstanbieters in den Einzugbereich eines anderen Dienstanbieters wechseln. Das Endgerät kann die Signalleistung der einzelnen Übertragungskanäle permanent überwachen. Durch Festlegen geeigneter Schwellwerte erkennt das Endgerät, wann ein Wechsel zwischen den einzelnen Übertragungskanälen geeignet erscheint.

Ferner trifft das Endgerät basierend auf einer permanenten Abfrage an das gewählte Zugangsnetzwerk beziehungsweise potentielle Zugangsnetzwerke von Übertragungsparametern, wie Verfügbarkeit, Übertragungskapazitäten und den minimalen Serviceparametern (QoS), die Wahl geeigneter Übertragungskanälen treffen.

Die permanente Abfrage der Übertragungsparameter erhöht den Energieverbrauch des Endgeräts und belegt die Übertragungskapazitäten der Übertragungskanäle.

Die Druckschrift US 2006/0276192 A1 und das Dokument US 2006/0227746 A1 offenbaren jeweils Verfahren zum nahtlosen Übergang eines Netzwerkteilnehmers zwischen heterogenen Zugangsnetzen.

Die Druckschrift EP 1 551 144 A1 offenbart ein Verfahren und ein System zur Bereitstellung von Multimedia-Kommunikationsdienstleistungen, bei dem ein nahtloser Übergang zwischen unterschiedlichen Netzwerken gewährleistet wird.

Aus der Druckschrift WO 2006/132487 A1 ist ein drahtloses Netzwerk bekannt, bei dem ein Server Konfigurations-Information für unterschiedliche benachbarte Netze bereitstellt, um Mobilgeräten einen nahtlosen Übergang zwischen den benachbarten Netzen zu ermöglichen.

Die Druckschrift EP 1 460 799 A1 offenbart ein Kommunikationsnetz, bei dem im Rahmen einer Überwachung einer Servicequalität Qualitätsinformation zwischen Kommunikationsteilnehmern übermittelt wird.

Eine Aufgabe der vorliegenden Erfindung ist es, ein Verfahren und einen Server für ein Netzwerk zu schaffen, das mit einer geringen Anzahl von einzelnen Übertragungen auskommt und dem Endgerät Übertragungsparameter von Übertragungskanälen bereitstellt.

Die Aufgabe wird durch den Server mit den Merkmalen des Patentanspruchs 1, das Verfahren mit den Merkmalen des Patentanspruchs 6, das Verfahren mit den Merkmalen des Patentanspruch 12 und das System, den Datenträger, das Endgerät nach den Patentansprüchen 14, 15, 16 gelöst.

Die vorliegende Erfindung schafft einen Server, der aufweist: eine Erfassungseinrichtung zum Erfassen von Änderungen, die mindestens einen Übertragungsparameter für Übertragungskanäle zwischen einem Endgerät und mindestens einem Zugangsnetzwerk betreffen;
eine Auswahlkriterien-Datenbank zum Speichern von Auswahlkriterien zum Auswählen einer Gruppe von Änderungen der Übertragungsparameter aus den Änderungen der Übertragungsparameter; einer Auswahleinrichtung zum Auswählen der Gruppe von erfassten Änderungen der Übertragungsparameter aus den erfassten Änderungen der Übertragungsparameter basierend auf den gespeicherten Auswahlkriterien; und mit
einer Ausgabeeinrichtung zum Übermitteln der ausgewählten Gruppe von erfassten Änderungen von Übertragungsparametern an das Endgerät.

Eine Ausgestaltung sieht vor, dass die Erfassungseinrichtung mit einer Parameter-Datenbank verbunden ist und in der Parameter-Datenbank die Übertragungsparameter betreffend die Übertragungskanäle zwischen einem Endgerät und mindestens einem Zugangsnetzwerk gespeichert sind.

Eine Ausgestaltung sieht vor, dass die Ausgabeeinrichtung implementiert ist zum Übermitteln der ausgewählten Gruppe von Änderungen von Übertragungsparametern an eine medienunabhängige Zwischenschicht des Endgeräts.

Eine Ausgestaltung sieht vor, dass eine Empfangseinrichtung zum Empfangen von Auswahlkriterien und zum Abspeichern der Auswahlkriterien in der Auswahlkriterien-Datenbank vorgesehen ist.

Eine Ausgestaltung sieht vor, dass die Empfangseinrichtung zum Empfangen von Auswahlkriterien übertragen mittels eines SIP (Session Initiation Protocol)-Protokolls eingerichtet ist.

Die Erfindung schafft ein Verfahren zum Betreiben eines Servers mit den folgenden Schritten:
Erfassen von Änderungen, die mindestens einen Übertragungsparameter für Übertragungskanäle zwischen einem Endgerät und mindestens einem Zugangsnetzwerk betreffen;
Speichern von Auswahlkriterien zum Auswählen einer Gruppe von Änderungen der Übertragungsparameter aus den Änderungen der Übertragungsparameter in einer Auswahlkriterien-Datenbank; Auswählen der Gruppe von Änderungen der Übertragungsparameter aus den erfassten Änderungen der Übertragungsparameter basierend auf den gespeicherten Auswahlkriterien; und Übermitteln der ausgewählten Gruppe von erfassten Änderungen von Übertragungsparametern an das Endgerät.

Eine Ausgestaltung sieht vor, dass die Übertragungsparameter eine garantierte Dienstqualität (QoS), freie Übertragungskapazitäten und Roaminggebühren umfassen.

Eine Ausgestaltung sieht vor, dass die Auswahlkriterien in einer SIP (Session Initiation Protocol)-Anfrage von dem Endgerät an den Server übertragen werden.

Eine Ausgestaltung sieht vor, dass die SIP-Anfrage eine Subscribe Anfrage ist.

Eine Ausgestaltung sieht vor, dass eine Nachricht mit der ausgewählten Gruppe von erfassten Änderungen von Übertragungsparametern an eine Medien-unabhängige Zwischenschicht des Endgeräts übermittelt wird.

Eine Ausgestaltung sieht vor, dass für ein Protokoll der Medien-unabhängigen Zwischenschicht eine Nachrichtenklasse definiert wird, die die Nachricht mit der ausgewählten Gruppe von erfassten Änderungen von Übertragungsparametern verarbeitet.

Die Erfindung schafft ein Verfahren zum Betreiben eines Endgeräts, das Zugang zu mindestens einem Zugangsnetz über mindestens einen Übertragungskanal mit Übertragungsparametern, die Änderungen unterliegen, aufweist, mit den folgenden Schritten:
Erstellen eines Auswahlkriteriums zum Auswählen einer Gruppe von Änderungen der Übertragungsparameter aus möglichen Änderungen der Übertragungsparameter;
Übermitteln des Auswahlkriteriums an einen Server, der basierend auf dem Auswahlkriterium Nachrichten über Änderungen von Übertragungsparametern gemäß dem Auswahlkriterium an das Endgerät übermittelt;
Empfangen der Nachrichten von dem Server; und
Festlegen basierend auf den Nachrichten mit welchem des mindestens einen Zugangsnetzes und über welchen Übertragungskanal ein Zugang eingerichtet wird.

Eine Ausgestaltung sieht vor, dass eine Anwendungsapplikation, die auf dem Endgerät ausgeführt wird, das Auswahlkriterium erstellt.

Die vorliegende Erfindung wird nachfolgend anhand bevorzugter Ausführungsformen und einer beigefügten Zeichnung erläutert. In der Zeichnung zeigen:
Fig. 1 ein Blockschema zum Erläutern eines Netzwerkes gemäß einer Ausführungsform; und
Fig. 2 ein Blockschema zum Erläutern eines Netzwerkes gemäß einer weiteren Ausführungsforform eine physikalische Schicht, zwei physikalische Schichten oder mehrere unterschiedliche physikalische Schichten aufweisen. Gleiches gilt für die Übertragungsschichten. Ferner können neben den IEEE spezifizierten Schnittstellen, RRC und LAC Schnittstellen für 3GPP, 3GPP2 und UMTS vorgesehen sein. Die Liste der Beispiele für physikalischen Schichten und Datenübertragungsschichten ist nicht abschließend.

Eine Medien-unabhängige-Zwischenschicht (MIH, media independent handover) 8 gemäß dem IEEE 802.21 Protokoll kann eine Kommunikation über die unterschiedlichen Medien verwalten. Insbesondere stellt dieser Standard eine Möglichkeit bereit eine Kommunikation zwischen dem Endgerät 1 und einem Zugangsform eine physikalische Schicht, zwei physikalische Schichten oder mehrere unterschiedliche physikalische Schichten aufweisen. Gleiches gilt für die Übertragungsschichten. Ferner können neben den IEEE spezifizierten Schnittstellen, RRC und LAC Schnittstellen für 3GPP, 3GPP2 und UMTS vorgesehen sein. Die Liste der Beispiele für physikalischen Schichten und Datenübertragungsschichten ist nicht abschließend.

Eine Medien-unabhängige-Zwischenschicht (MIH, media independent handover) 8 gemäß dem IEEE 802.21 Protokoll kann eine Kommunikation über die unterschiedlichen Medien verwalten. Insbesondere stellt dieser Standard eine Möglichkeit bereit eine Kommunikation zwischen dem Endgerät 1 und einem ZugangsNetzwerk (Access Network) 9 aufzubauen, zu verwalten, zu beenden und eine Kommunikationsmöglichkeit mit anderen Netzwerken zu prüfen. Hierzu werden Nachrichten, Ereignisse und Befehle gemäß dem IEEE 802.21 Protokoll festgelegt und in den einzelnen Datenübertragungsschichten und physikalischen Schichten implementiert.

Die Medien-unabhängige-Zwischenschicht 8 schafft eine Protokolleinheit, die zwischen der Netzwerkschicht (Schicht 3 nach dem OSI Basismodell) und der Übertragungsschicht (Schicht 2 nach dem OSI Basismodell) angeordnet ist. Zugriffspunkte (Service Access Points, SAP) ermöglichen den Austausch von grundlegenden Diensten zwischen der Medien-unabhängigen-Zwischenschicht 8 und den benachbarten Schichten und funktionellen Ebenen. Die Medien-unabhängige-Zwischenschicht 8 des Endgeräts 1 stellt ferner Befehle und Nachrichten bereit, die eine Kommunikation mit anderen Geräten und deren Medienunabhängiger-Zwischenschicht ermöglicht.

Die Medien-unabhängige-Zwischenschicht 8 in dem Endgerät 1 weist eine Entscheidungseinrichtung 20 auf, die entscheidet welches die beste verfügbare Zugriffstechnologie oder Medium zum Unterhalten der momentanen Verbindung ist. Die Entscheidungseinrichtung 20 entscheidet dies basierend anhand von Übertragungsparametern, wie verfügbaren Schnittstellen, minimal erforderlicher Dienstqualität (QoS), Policies, Übertragungsgebühren, Sicherheitseinstellungen, etc.. Die Datenübertragung zwischen dem Endgerät 1 und dem Zugriffs-Netzwerk 9 erfolgt entsprechend mit der von der Entscheidungseinrichtung 20 gewählten Zugriffstechnologie.

Die höheren Protokollschichten 10 übertragen ihre Datenpakete im Idealfall ohne Kenntnis über die gewählte Zugriffstechnologie zu benötigen.

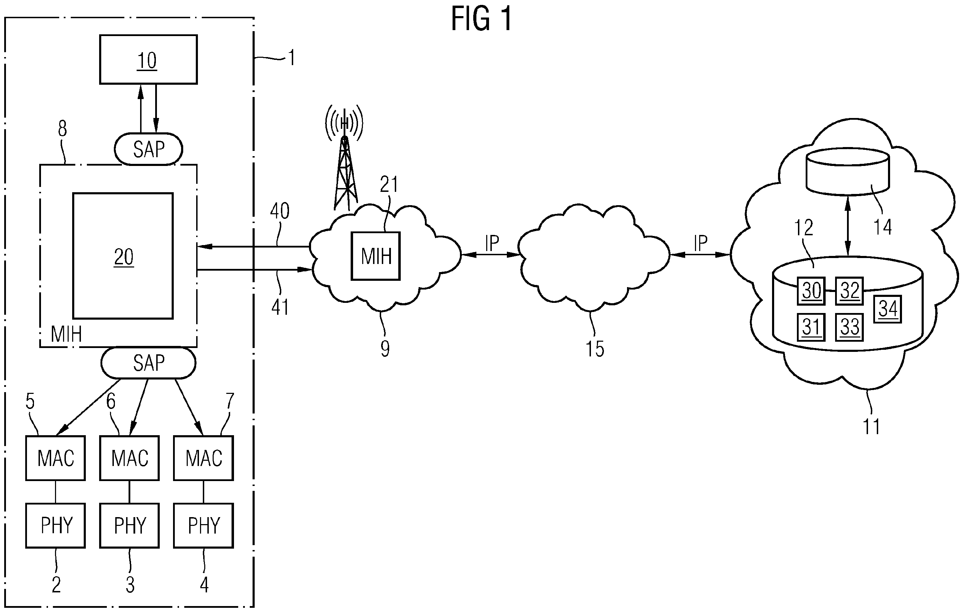

Eine drahtlose Kommunikation kann wie in Fig. 1 dargestellt mit einem Zugangsnetzwerk 9, beispielsweise einem RAN Netzwerk (radio area network) 9 erfolgen. Das Zugangsnetzwerk 9 weist ebenfalls eine Medien-unabhängige-Zwischenschicht 21 auf, um mit der Medien-unabhängigen-Zwischenschicht 20 des Endgeräts 1 zu kommunizieren. Das Endgerät 1 und das Zugangsnetzwerk 9 initialisieren und trennen gegebenenfalls die Kommunikation. Die Übergabe der Kommunikation von einem Zugangsnetzwerk 9 an ein weiteres Zugangsnetzwerk (nicht dargestellt) wird durch das IEEE 802.21 Protokoll mit keinem oder einem geringen Verlust an Datenpaketen realisiert. Die Übertragung von Datenpaketen oder Datenströmen erfolgt über Übertragungskanäle 40 und 41 zwischen dem Endgerät 1 und dem Zugangsnetzwerk.

Die Kommunikation zu einem Heimnetz 11 eines Dienstanbieters kann über einen IP Transport erfolgen. Dies gilt insbesondere dann, wenn das Heimnetz 11 des Dienstanbieters nicht mit dem Zugangsnetzwerk 9 zusammenfällt. Zwischen dem Zugangsnetzwerk 9 und dem Heimnetz 11 können noch weitere vermittelnde Netzwerke 15 zwischengeschaltet sein.

Wie bereits ausgeführt, wählt die Medien-unabhängige-Zwischenschicht 20 des Endgeräts 1 aus, über welche Zugriffstechnologie eine Kommunikation mit dem Zugangsnetzwerk 9 geführt werden soll, d.h. über welches Medium.

Einzelne Übertragungsparameter, wie zum Beispiel die Signalstärke einer Übertragung zu benachbarten Zugangsnetzwerken 9, das heißt vorrangig physikalische Übertragungsparameter, kann das Endgerät 1 selbst bestimmen. Gleichermaßen kann das Endgerät 1 die in der Umgebung verfügbaren Zugangsnetzwerke 9 selbsttätig erkennen.

Die Entscheidung mit welchen Zugangsnetzwerken 9 tatsächlich eine Verbindung aufgenommen werden darf, legt unter Anderem auch der Dienstanbieter für das Endgerät 1 fest. Ein Zugriff auf ein Zugangsnetzwerk 9 eines Fremdanbieters kann unter Umständen verweigert werden. Die bereitgestellten Übertragungskapazitäten, die minimale zugesicherte Dienstqualität kann in Abhängigkeit der unterschiedlichen Zugriffstechnologien oder angewählten Zugangsnetzwerken 9 von dem Dienstanbieter eingestellt und mit der Zeit auch geändert werden. Diese zum Teil kommerziell begründeten Übertragungsparameter werden von dem Dienstanbieter bereitgestellt.

Die Übertragungsparameter sind auf einem Server 12 in dem Heimnetz 11 des Dienstanbieters abgelegt. Die Übertragungsparameter können individuell für die unterschiedlichen Kombinationen von Zugriffstechnologien und Zugangsnetzwerken 9 in einer Parameter-Datenbank 14 für ein Endgerät 1 abgelegt sein.

In einer Ausgestaltung wird der Server 12 hinsichtlich der unterschiedlichen Kombinationen durch das Endgerät 1 aktualisiert. Das Endgerät 1 ermittelt basierend auf dem Protokoll der Medien-unabhängigen-Zwischenschicht 8, mit welchen Zugangsnetzwerken 9 es mit welchen Zugriffstechnologien potentiell eine Verbindung aufbauen könnte. Die potentiellen Kanäle können an den Server 12 übermittelt werden.

Der Server 12 übermittelt an das Endgerät 1 für ein potentielles neues Zugangsnetzwerk 9 und eine Verbindung mit einer Zugriffstechnologie die zugehörigen Übertragungsparameter. Die Entscheidungseinrichtung 20 in dem Endgerät 1 initialisiert dann entsprechend den Aufbau oder Wechsel zu dem neuen Zugangsnetzwerk 9 oder nicht.

Nachdem eine Verbindung etabliert ist und das Endgerät 1 keine Anhaltspunkte für einen vorteilhaften Wechsel zu einem anderen Zugangsnetzwerk 9 hat, wie zum Beispiel einem Abfall der Sendeleistung, wird in diese Verbindung mit der gewählten Zugriffstechnologie aufrechterhalten.

Die Übertragungsparameter können jedoch variieren. Deshalb ist es notwendig, das Endgerät 1 über Änderungen der Übertragungsparameter zu benachrichtigen. Gegebenenfalls ist es ohne für das Endgerät 1 selbst ersichtlich notwendig den Zugang zu einem Dienstanbieter über ein anderes Zugangsnetzwerk 9 als das gewählte zu etablieren, weil beispielsweise die von dem Anbieter des Zugangsnetzwerks 9 dem Dienstanbieter des Heimnetzes 11 gewährten Übertragungskapazitäten erschöpft sind.

In einer einfachsten Variante kann sich das Endgerät durch ständiges Abfragen der Parameter-Datenbank 14 auf dem aktuellen Stand der gültigen Übertragungsparameter halten oder die Parameter-Datenbank 14 übermittelt ständig alle auftretenden Änderungen von Übertragungsparametern.

Die hier beschriebene Ausführungsform gewährleistet ebenfalls, dass das Endgerät 1 auf aktuellstem Stand gehalten wird. Zudem soll der Verarbeitungsaufwand für das Endgerät 1 gegenüber einem ständigen Abfragen bzw. einem Verarbeiten häufig eintreffender Nachrichten über Änderungen reduziert werden. An das Endgerät 1 sollen nur die Benachrichtigungen gesandt werden, die für dieses Endgerät 1 relevant sein könnten. Deshalb wird folgendes Schema implementiert.

In dem Heimnetz 11 des Dienstanbieters ist die Parameter-Datenbank 14 vorgesehen. In der Parameter-Datenbank 14 werden die Parameter für die unterschiedlichen Übertragungskanäle 40, 41 gespeichert.

Der Server weist eine Erfassungseinrichtung 30 auf. In dem Fall, dass der Dienstanbieter einen Übertragungsparameter in der Parameter-Datenbank 14 ändert, wird dies durch eine Erfassungseinrichtung 30 in dem Server 12 erfasst.

Eine Ausgabeeinrichtung 31 des Servers 12 benachrichtigt über den bestehenden Übertragungskanal das Endgerät 1 oder dessen Entscheidungseinrichtung 20 in der Medien-unabhängigen Zwischenschicht 8 von der Änderung des Übertragungsparameters.

Hierbei wird das Endgerät 1 noch über alle Änderungen von Übertragungsparametern, ob für das Endgerät 1 relevant oder nicht benachrichtigt. Diese Informationsflut kann durch einen weiteren Mechanismus reduziert werden.

Das Endgerät 1 oder die Entscheidungseinrichtung 20 legen fest, über welche Änderungen von Übertragungsparametern sie informiert werden sollen. Das Endgerät 1 oder dessen Entscheidungseinrichtung 20 ermittelt anhand einer technischen Konfiguration des Endgeräts 1, den auf dem Endgerät ausgeführten Applikationen, Benutzereinstellungen, etc. über welche Änderungen relevant sind. Die Entscheidungseinrichtung 20 definiert hierzu ein Auswahlkriterium (Event-Filter).

Das Auswahlkriterium wird von der Entscheidungseinrichtung 20 an eine Empfangseinrichtung 33 des Servers 12 übermittelt. Der Server 12 verwendet das Auswahlkriterium nachfolgend, um zu entscheiden ob eine erfasste Änderung eines Parameters an das Endgerät 1 übermittelt wird oder nicht.

In dem Server 12 ist eine Auswahlkriterien-Datenbank 32 vorgesehen. Das oder die von dem Endgerät 1 übermittelten Auswahlkriterien werden in der Auswahlkriterien-Datenbank 32 gespeichert. Die Erfassungseinrichtung 30 oder eine Auswahleinrichtung 34 prüft nachdem eine Änderung von Übertragungsparametern erfasst wurde, ob die erfasste Änderung von Übertragungsparametern einem Auswahlkriterium in der Auswahlkriterien-Datenbank 32 entspricht. Ist dies der Fall, wird das Endgerät 1 über die Änderung des Parameters durch eine Nachricht informiert. Andernfalls unterbleibt diese Nachricht.

Das Auswahlkriterium kann seitens einer Applikation, die auf dem Endgerät ausgeführt wird, erstellt werden. Als Beispiel sei hierfür eine Anwendung für eine Videokonferenz genannt, die um eine flüssige Bildübertragung zu gewährleisten Mindestanforderungen an die Übertragungskapazitäten und die Dienstqualität stellt. Ein entsprechendes Auswahlkriterium kann hierzu Angaben über diese Mindestanforderungen (Quality of Service, QoS) enthalten.

In einer Ausführungsform werden die Auswahlkriterien mittels der SIP (Session Initiation Protokoll) Architektur an den Server 12 übertragen. Der Befehl SIP SUBSCRIBE kann hierzu verwendet werden, um neue Auswahlkriterien bei dem Server 12 anzumelden.

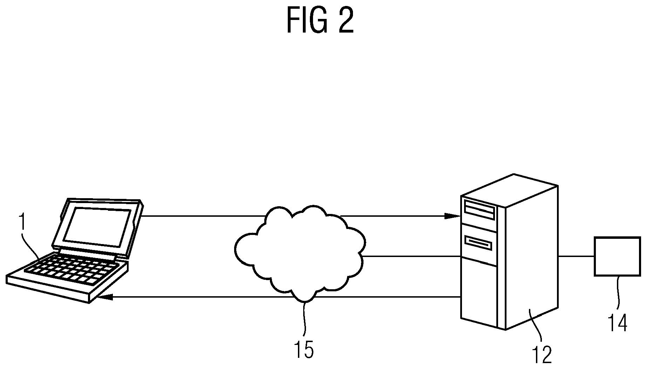

In Fig. 2 ist schematisch das Anmeldungsverfahren und Benachrichtigungsverfahren der obigen Ausführungsformen dargestellt. Im Folgenden beziehen sich die Bezugszeichen weiterhin auf Figur 1.Das Endgerät 1, beziehungsweise eine auf dem Endgerät ausgeführte Anwendung, übermittelt einen SUBSCRIBE Befehl an das Heimnetz 11 des Dienstanbieters. Der SUBSCRIBE Befehl transportiert einen geeignetes Auswahlkriterium. Der Server 12 im Heimnetz 11 des Dienstanbieters speichert das Auswahlkriterium wie oben beschrieben ab. Der Server 12 überwacht permanent die Übertragungsparameter in der Parameter-Datenbank 14. Bei einer Änderung eines der Übertragungsparameter vergleicht der den Übertragungsparameter mit den gespeicherten Auswahlkriterien. Entspricht einer der Übertragungsparameter den Spezifikationen einer der Auswahlkriterien, wird das Endgerät 1 von dem Server 12 über die Änderung oder den neuen Übertragungsparameter benachrichtigt.

Der SUBSCRIBE Befehl kann beispielsweise wie folgt aussehen:

```
 SUBSCRIBE sip:List1@example.com SIP/2.0
 ...
 <?xml version="1.0" encoding="UTF-8"?>
 <filter id="123" uri="sip:joe@unix.com">
  <what>
   <include>
     //Location
   </include>
  </what>
 </filter>
```

Diese SUBSCRIBE Anfrage fordert den Server 12 auf, das Endgerät bei Änderungen des Ortes (Location) zu benachrichtigen. Das Auswahlkriterium wird durch "filter" in der Anfrage spezifiziert.

Anstelle des Orts kann die Anfrage auch Übertragungsparameter bezüglich der Dienstqualität (QoS) enthalten. Hierbei kann ein unterer Schwellwert der Dienstqualität angegeben werden. Wird dieser Schwellwert unterschritten, ist das Endgerät zu benachrichtigen, damit z.B. eine Übertragung eines Streams oder eines Voice over IP Telefonats mit ausreichender Qualität über einen anderen Kanal sichergestellt werden kann. Eine Benachrichtigung bei Überschreiten einer Dienstqualität kann ebenfalls durch ein Auswahlkriterium angefordert werden. In diesem Fall kann das Endgerät auf den besseren Übertragungskanal wechseln.

## Patentansprüche

1. Server (12), mit
einer Erfassungseinrichtung (30) zum Erfassen von Änderungen, die mindestens einen Übertragungsparameter für Übertragungskanäle (40, 41) zwischen einem Endgerät (1) und mindestens einem Zugangsnetzwerk (9) betreffen;
einer Empfangseinrichtung (33) zum Empfangen von durch das Endgerät erstellten Auswahlkriterien zum Auswählen einer Gruppe von Änderungen der Übertragungsparameter aus den Änderungen der Übertragungsparameter;
einer Auswahlkriterien-Datenbank (32) zum Speichern der übermittelten Auswahlkriterien;
einer Auswahleinrichtung (34) zum Auswählen der Gruppe von erfassten Änderungen der Übertragungsparameter aus den erfassten Änderungen der Übertragungsparameter basierend auf den gespeicherten Auswahlkriterien; und mit
einer Ausgabeeinrichtung (31) zum Übermitteln der ausgewählten Gruppe von erfassten Änderungen von Übertragungsparametern an das Endgerät (1).

2. Server nach Anspruch 1, wobei die Erfassungseinrichtung (30) mit einer Parameter-Datenbank (14) verbunden ist und in der Parameter-Datenbank (14) die Übertragungsparameter betreffend die Übertragungskanäle (40, 41) zwischen einem Endgerät (1) und mindestens einem Zugangsnetzwerk (9) gespeichert sind.

3. Server nach Anspruch 1 oder 2, **dadurch gekennzeichnet, dass** die Ausgabeeinrichtung (31) implementiert ist zum Übermitteln der ausgewählten Gruppe von Änderungen von Übertragungsparametern an eine medienunabhängige Zwischenschicht (8) des Endgeräts (1).

4. Server nach einem der vorhergehenden Ansprüche 1 bis 3, **dadurch gekennzeichnet, dass** eine Empfangseinrichtung (33) zum Empfangen von Auswahlkriterien und zum Abspeichern der Auswahlkriterien in der Auswahlkriterien-Datenbank (32) vorgesehen ist.

5. Server nach Anspruch 4, **dadurch gekennzeichnet, dass** die Empfangseinrichtung zum Empfangen von Auswahlkriterien übertragen mittels eines SIP (Session Initiation Protocol)-Protokolls eingerichtet ist.

6. Verfahren zum Betreiben eines Servers mit den folgenden Schritten:
Erfassen von Änderungen, die mindestens einen Übertragungsparameter für Übertragungskanäle (40, 41) zwischen einem Endgerät (1) und mindestens einem Zugangsnetzwerk (9) betreffen;
Empfangen von durch das Endgerät erstellten Auswahlkriterien zum Auswählen einer Gruppe von Änderungen der Übertragungsparameter aus den Änderungen der Übertragungsparameter;
Speichern der übermittelten Auswahlkriterien in einer Auswahlkriterien-Datenbank (32);
Auswählen der Gruppe von Änderungen der Übertragungsparameter aus den erfassten Änderungen der Übertragungsparameter basierend auf den gespeicherten Auswahlkriterien; und
Übermitteln der ausgewählten Gruppe von erfassten Änderungen von Übertragungsparametern an das Endgerät (1).

7. Verfahren nach Anspruch 6, wobei die Übertragungsparameter eine garantierte Dienstqualität (QoS), freie Übertragungskapazitäten und Roaminggebühren umfassen.

8. Verfahren nach Anspruch 6 oder 7, wobei die Auswahlkriterien in einer SIP (Session Initation Protocol)-Anfrage an den Server übertragen werden.

9. Verfahren nach einem Anspruch 8, wobei die SIP-Anfrage eine Subscribe Anfrage ist.

10. Verfahren nach einem der Ansprüche 6 bis 9, wobei eine Nachricht mit der ausgewählten Gruppe von erfassten Änderungen von Übertragungsparametern an eine Medien-unabhängige Zwischenschicht (8) des Endgeräts (1) übermittelt wird.

11. Verfahren nach Anspruch 10, wobei für ein Protokoll der Medien-unabhängigen Zwischenschicht (8) eine Nachrichtenklasse definiert wird, die die Nachricht mit der ausgewählten Gruppe von erfassten Änderungen von Übertragungsparametern verarbeitet.

12. Verfahren zum Betreiben eines Endgeräts (1), das Zugang zu mindestens einem Zugangsnetz (9) über mindestens einen Übertragungskanal (40, 41) mit Übertragungsparametern, die Änderungen unterliegen, aufweist, mit den folgenden Schritten:
Erstellen eines Auswahlkriteriums zum Auswählen einer Gruppe von Änderungen der Übertragungsparameter aus möglichen Änderungen der Übertragungsparameter;
Übermitteln des Auswahlkriteriums an einen Server (12), der basierend auf dem Auswahlkriterium eine Gruppe von erfassten Änderungen der Übertragungsparameter aus erfassten Änderungen der Übertragungsparameter und basierend auf den gespeicherten Auswahlkriterien auswählt und Nachrichten über die ausgewählte Gruppe an das Endgerät (1) übermittelt;
Empfangen der Nachrichten mit der ausgewählten Gruppe von erfassten Änderungen von dem Server (2); und
Festlegen basierend auf den Nachrichten mit welchem des mindestens einen Zugangsnetzes (9) und über welchen Übertragungskanal (40, 41) ein Zugang eingerichtet wird.

13. Verfahren nach Anspruch 12, wobei eine Anwendungsapplikation, die auf dem Endgerät ausgeführt wird, das Auswahlkriterium erstellt.

14. System mit mindestens einem Server (12) nach einem der Ansprüche 1 bis 5 und mindestens einem Endgerät (1), wobei der Server (12) durch ein Verfahren nach den Ansprüchen 6 bis 11 betrieben wird und das Endgerät (1) durch ein Verfahren gemäß Anspruch 12 betrieben wird.

15. Datenträger mit gespeicherten Programmbefehlen zum Ausführen eines Verfahren nach einem der Ansprüche 6 bis 13.

16. Endgerät (1) mit Mitteln zum Betrieb durch ein Verfahren gemäß Anspruch 12.

## Claims

1. Server (12) having
a detection device (30) for detecting changes which affect at least one transmission parameter for transmission channels (40, 41) between a terminal (1) and at least one access network (9);
a receiving device (33) for receiving selection criteria, created by the terminal, for selecting a group of changes in the transmission parameters from the changes in the transmission parameters;
a selection criteria database (32) for storing the transmitted selection criteria;
a selection device (34) for selecting the group of detected changes in the transmission parameters from the detected changes in the transmission parameters on the basis of the stored selection criteria; and having
an output device (31) for transmitting the selected group of detected changes in transmission parameters to the terminal (1) .

2. Server according to Claim 1, wherein the detection device (30) is connected to a parameter database (14), and the transmission parameters affecting the transmission channels (40, 41) between a terminal (1) and at least one access network (9) are stored in the parameter database (14).

3. Server according to Claim 1 or 2, **characterized in that** the output device (31) is implemented for the purpose of transmitting the selected group of changes in transmission parameters to a media-independent intermediate layer (8) of the terminal (1).

4. Server according to one of the preceding Claims 1 to 3, **characterized in that** a receiving device (33) for receiving selection criteria and for storing the selection criteria in the selection criteria database (32) is provided.

5. Server according to Claim 4, **characterized in that** the receiving device is set up to receive selection criteria transmitted using an SIP (Session Initiation Protocol) protocol.

6. Method for operating a server, having the following steps of:
detecting changes which affect at least one transmission parameter for transmission channels (40, 41) between a terminal (1) and at least one access network (9);
receiving selection criteria, created by the terminal, for selecting a group of changes in the transmission parameters from the changes in the transmission parameters;
storing the transmitted selection criteria in a selection criteria database (32);
selecting the group of changes in the transmission parameters from the detected changes in the transmission parameters on the basis of the stored selection criteria; and
transmitting the selected group of detected changes in transmission parameters to the terminal (1).

7. Method according to Claim 6, wherein the transmission parameters comprise a guaranteed quality of service (QoS), free transmission capacities and roaming charges.

8. Method according to Claim 6 or 7, wherein the selection criteria are transmitted to the server in an SIP (Session Initiation Protocol) request.

9. Method according to Claim 8, wherein the SIP request is a subscribe request.

10. Method according to one of Claims 6 to 9, wherein a message having the selected group of detected changes in transmission parameters is transmitted to a media-independent intermediate layer (8) of the terminal (1).

11. Method according to Claim 10, wherein a message class, which processes the message having the selected group of detected changes in transmission parameters, is defined for a protocol of the media-independent intermediate layer (8).

12. Method for operating a terminal (1) which has access to at least one access network (9) via at least one transmission channel (40, 41) having transmission parameters which are subject to changes, having the following steps of:
creating a selection criterion for selecting a group of changes in the transmission parameters from possible changes in the transmission parameters;
transmitting the selection criterion to a server (12) which selects a group of detected changes in the transmission parameters from detected changes in the transmission parameters on the basis of the selection criterion and on the basis of the stored selection criteria and transmits messages relating to the selected group to the terminal (1);
receiving the messages having the selected group of detected changes from the server (2); and
determining, on the basis of the messages, the at least one access network (9) with which access is set up and the transmission channel (40, 41) via which access is set up.

13. Method according to Claim 12, wherein an application which is executed on the terminal creates the selection criterion.

14. System having at least one server (12) according to one of Claims 1 to 5 and at least one terminal (1), wherein the server (12) is operated by means of a method according to Claims 6 to 11 and the terminal (1) is operated by means of a method according to Claim 12.

15. Data storage medium having stored program instructions for carrying out a method according to one of Claims 6 to 13.

16. Terminal (1) having means for operation by means of a method according to Claim 12.

## Revendications

1. Serveur (12), comprenant
un dispositif de détection (30) pour détecter des variations concernant au moins un paramètre de transmission pour des canaux de transmission (40, 41) entre un terminal (1) et au moins un réseau d'accès (9) ;
un dispositif de réception (33) pour recevoir des critères de sélection établis par le terminal pour sélectionner un groupe de variations des paramètres de transmission parmi les variations des paramètres de transmission ;
une base de données de critères de sélection (32) pour stocker les critères de sélection transmis ;
un dispositif de sélection (34) pour sélectionner le groupe de variations détectées des paramètres de transmission parmi les variations détectées des paramètres de transmission sur la base des critères de sélection mémorisés ; et
un dispositif de sortie (31) pour transmettre le groupe sélectionné de variations détectées de paramètres de transmission au terminal (1).

2. Serveur selon la revendication 1, le dispositif de détection (30) étant relié à une base de données de paramètres (14) et dans ladite base de données de paramètres (14) étant stockés les paramètres de transmission concernant les canaux de transmission (40, 41) entre un terminal (1) et au moins un réseau d'accès (9).

3. Serveur selon la revendication 1 ou 2, **caractérisé en ce que** le dispositif de sortie (31) est implémenté pour transmettre le groupe sélectionné de variations de paramètres de transmission à une couche intermédiaire (8) indépendante des supports du terminal (1).

4. Serveur selon l'une des revendications 1 à 3, **caractérisé en ce qu'**un dispositif de réception (33) est prévu pour recevoir des critères de sélection et pour enregistrer les critères de sélection dans la base de données de critères de sélection (32).

5. Serveur selon la revendication 4, **caractérisé en ce que** ledit dispositif de réception est configuré pour recevoir des critères de sélection au moyen d'un protocole SIP (Session Initiation Protocol).

6. Procédé d'exploitation d'un serveur comprenant les étapes suivantes :
détecter des variations concernant au moins un paramètre de transmission pour des canaux de transmission (40, 41) entre un terminal (1) et au moins un réseau d'accès (9) ;
recevoir des critères de sélection établis par le terminal pour sélectionner un groupe de variations des paramètres de transmission parmi les variations des paramètres de transmission ;
stocker les critères de sélection transmis dans une base de données de critères de sélection (32) ;
sélectionner le groupe de variations des paramètres de transmission parmi les variations détectées des paramètres de transmission sur la base des critères de sélection enregistrés ; et
transmettre le groupe sélectionné de variations détectées de paramètres de transmission au terminal (1).

7. Procédé selon la revendication 6, les paramètres de transmission comprenant une qualité de service garantie (QoS), des capacités de transmission libres et des frais d'itinérance.

8. Procédé selon la revendication 6 ou 7, les critères de sélection étant transmis au serveur dans une demande SIP (Session Initiation Protocol).

9. Procédé selon la revendication 8, la demande SIP étant une demande Subscribe.

10. Procédé selon l'une des revendications 6 à 9, un message contenant le groupe sélectionné de variations détectées de paramètres de transmission étant transmis à une couche intermédiaire (8) indépendante des supports du terminal (1).

11. Procédé selon la revendication 10, pour un protocole de ladite couche intermédiaire (8) indépendante des supports une classe de messages étant définie, qui traite le message contenant le groupe sélectionné de variations détectées de paramètres de transmission.

12. Procédé d'exploitation d'un terminal (1) ayant accès à au moins un réseau d'accès (9) via au moins un canal de transmission (40, 41) dont les paramètres de transmission sont soumis à des variations, comprenant les étapes suivantes :
élaborer un critère de sélection pour sélectionner un groupe de variations des paramètres de transmission parmi de possibles variations des paramètres de transmission ;
transmettre le critère de sélection à un serveur (12) qui sélectionne un groupe de variations détectées des paramètres de transmission parmi des variations détectées des paramètres de transmission sur la base du critère de sélection et sur la base des critères de sélection stockés et qui transmet des messages sur le groupe sélectionné au terminal (1) ;
recevoir des messages contenant le groupe sélectionné de variations détectées du serveur (2); et
déterminer sur la base desdits messages avec lequel du au moins un réseau d'accès (9) et via quel canal de transmission (40, 41) un accès est configuré.

13. Procédé selon la revendication 12, le critère de sélection étant établi par une application utilisateur exécutée sur le terminal.

14. Système comprenant au moins un serveur (12) selon l'une des revendications 1 à 5 et au moins un terminal (1), le serveur (12) étant exploité par un procédé selon les revendications 6 à 11 et le terminal (1) étant exploité par un procédé selon la revendication 12.

15. Support de données comprenant des instructions de programme pour mettre en oeuvre un procédé selon l'une des revendications 6 à 13.

16. Terminal (1) comprenant des moyens d'exploitation par un procédé selon la revendication 12.
